# EUROPEAN PATENT SPECIFICATION

(11) **EP 1 132 001 B1**
(45) Date of publication and mention of the grant of the patent: **15.09.2004**
(21) Application number: 00125295.6
(22) Date of filing: 27.11.2000
(51) Int. Cl.: A21C 3/10, A21C 11/22

(54) **Cutting device particularly for food processing machines and systems for bakeries, confectioneries**
Schneidevorrichtung insbesondere für Lebensmittelverarbeitungsmaschinen und Systeme für Bäckereien, Konditorwaren
Dispositif de coupe notamment pour machines de traitement de produits alimentaires et systèmes pour boulangeries, confiseries

(30) Priority: 24.02.2000 IT MI200341
(43) Date of publication of application: 12.09.2001
(73) Proprietor: Bertuetti Compact System S.r.l., 25030 Torbole Casaglia (Brescia) (IT)
(72) Inventor: Pagnoni, Edoardo, 25064 Gussago, (Prov. of Brescia) (IT)
(74) Representative: Modiano, Guido, Dr.-Ing.

(56) References cited:
- EP-A- 0 203 648
- CH-A- 107 185
- DE-U- 8 914 789
- GB-A- 556 030
- GB-A- 568 474
- GB-A- 2 124 533
- US-A- 1 534 907
- US-A- 2 264 115
- US-A- 2 959 811
- US-A- 3 994 652
- US-A- 4 944 596

## Description

The present invention relates to a cutting device particularly for food processing machines and systems for bakeries, confectioneries

CH-A-107185 discloses a cutting device having a combination of features as set forth in the precharacterizing portion of the appended claim 1.

It is known that in many of the machines that are used to process dough, such as for example dividers with rollers, it is necessary to cut the rolled ribbon of dough to preset dimensions.

In order to change the width of the strip being cut, the solutions of the prior art entail fully replacing the shaft with the cutting disks that divide the ribbon of dough into strips of preset width.

This solution entails fully removing the shaft with the disks from the machine and replace it with another shaft which must be stored with particular hygiene characteristics.

Another conventional solution provides a carousel system which in practice supports a plurality of shafts with corresponding cutting disks, so that it is possible to change the width of the strip of dough that is cut by turning the carousel thereby changing the shaft that engages the main roller on which the ribbon of dough is caused to advance.

This solution, too, is not practical, since it entails replacing the shaft with cutting disks that is used and most of all entails space occupations which are definitely inconvenient due to the presence of the carousel element.

The aim of the present invention is to eliminate the above noted drawbacks, by providing a cutting device particularly for food processing machines and systems for bakeries, confectioneries which allows to vary in practice the number of strips into which the ribbon of dough is cut without thereby replacing the cutting disks, thereby allowing to have a single shaft which supports disks which can be arranged according to the contingent requirements.

This aim is met by the features of the characterising portion of claim 1.

Within the scope of the above aim, a particular object of the invention is to provide a cutting device in which it is not necessary to replace mechanical elements and in which maintenance and cleaning are simplified considerably, in view of the fact that the operating environment requires crucial assurances of hygiene.

Another object of the present invention is to provide a cutting device which, thanks to its particular constructive characteristics, is capable of giving the greatest assurances of reliability and safety in use.

Another object of the present invention is to provide a cutting device which can be easily obtained starting from commonly commercially available elements and materials and is also competitive from a merely economical point of view.

In accordance with the invention, there is provided a cutting device particularly for food processing machines and systems for bakeries, confectioneries, as defined in the appended claims.

Further characteristics and advantages will become better apparent from the description of a preferred but not exclusive embodiment of a cutting device particularly for food processing machines and systems for bakeries, confectioneries, illustrated only by way of non-limitative example with the aid of the accompanying drawings, wherein:
Figure 1 is a schematic sectional view, taken along a vertical plane, of the cutting device according to the invention, applied to a divider;
Figure 2 is a schematic plan view of the coupling between the disks and the positioning roller;
Figure 3 is a sectional view, taken along a vertical plane, of a possible embodiment of the cutting device, according to the invention, applied to a divider;
Figure 4 is a schematic view of the operational coupling of the cutting disk supporting shaft with the main roller and with the positioning roller.

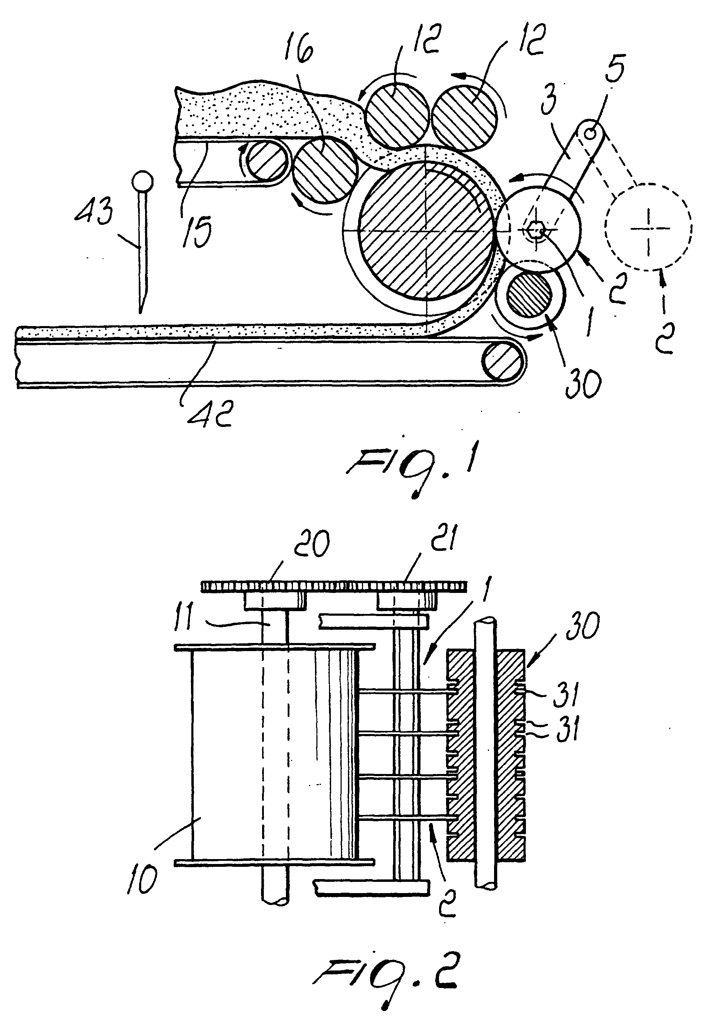

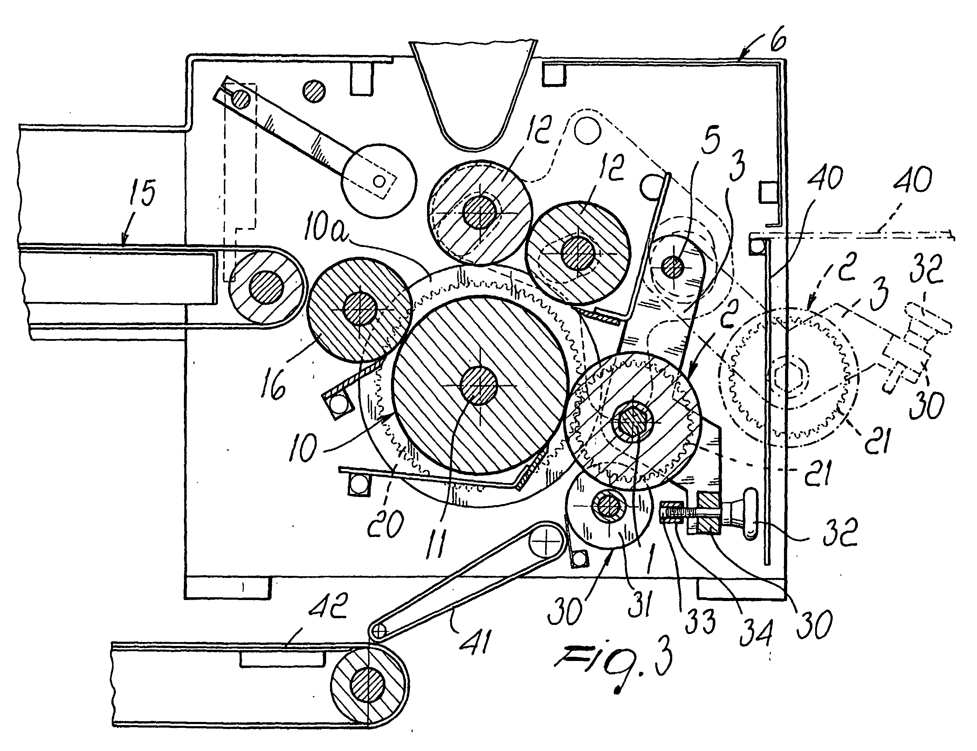

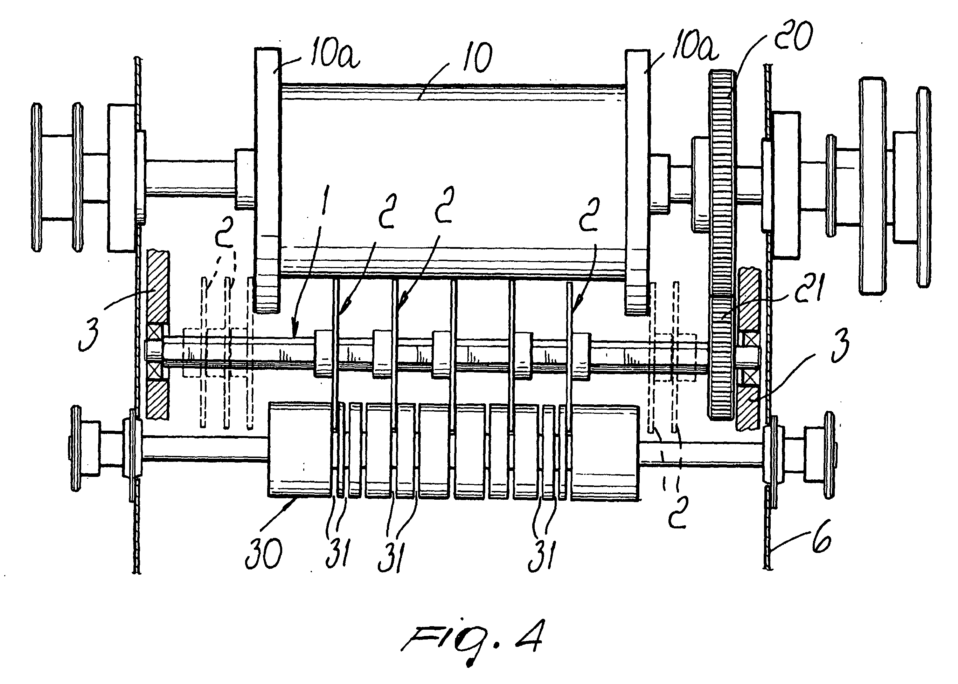

With reference to the figures, the cutting device particularly for food processing machines and systems for bakeries, confectioneries, according to the invention, comprises a shaft 1 for supporting a plurality of cutting disks 2.

The shaft 1 has a polygonal transverse cross-section, preferably a hexagonal one, so that the cutting disks rotate rigidly with the shaft.

The shaft is rotatably supported by a pair of levers 3 which are provided at the end of the shaft and can oscillate about a pivot 5 which is supported by the sides 6 of the frame of the machine.

The disks 2, as will become better apparent hereinafter, can operationally engage a main roller 10 which is supported by a main shaft 11 which is also rotatably connected to the frame of the machine.

Secondary rollers 12 interact with the main roller 10 and are designed to roll a ribbon of dough which is introduced by means of a feeder belt 15 which feeds the dough onto a conveyor roller 16 which is operatively connected to the main roller 10.

The main roller 10 has end flanges 10a, and a main gear 20 is keyed on the main shaft 11 and draws its motion from the central motor of the machine and transmits it by way of a driven gear 21 to the shaft 1, which is turned.

The main feature of the invention is that the cutting disks 2, which rotate rigidly with the shaft 1, can slide axially on the shaft so that they can assume a preset position and so as to make all, or some, of the cutting disks engage the main roller 10.

The shaft 1 protrudes axially with respect to the main roller 10, forming a region outside the roller in which the cutting disks 2 that are not involved in the process can optionally be confined.

The cutting disks 2 are kept in position through means for the removable retention of the cutting disks, which are constituted by a positioning roller 30 on which there are a plurality of grooves 31 in which the peripheral region of the cutting disks 2 fits, so as to achieve an axial positioning of the cutting disks with respect to the shaft 1.

The number of the grooves 31 and their position is such that it is possible to obtain a wide range of combinations of arrangement for the cutting disks 2.

The cutting disks 2, for their positioning, can be spaced by way of the oscillation of the arms 3 about the pivot 5; it should be noted that the arms 3 are joined by a cross-member 30 on which threaded pivots with a knob 32 are rotatably supported and engage, in the locking position, threaded holes 33 formed in a cross-member 34 which allows to lock in the active position the shaft 1 with the cutting disks 2.

In order to position the disks 2, the shaft 1 is spaced from the roller 10, after opening the swinging door 40 of the frame 6, and then the cutting disks 2 are arranged at will and are kept in position by the presence of the positioning roller 30, in the grooves 31 of which the disks fit.

The positioning roller 30 further performs the important function of disk for extracting the ribbon of dough being processed in order to convey it on the conveyor belt 41, which leads onto the output belt 42 whereon a conventional guillotine blade 43 acts, cropping the ribbon of dough to the intended dimensions.

From the above description it is thus evident that the invention achieves the intended aim and objects, and in particular it is stressed that a cutting device is provided in which it is possible to position the disks at the chosen distance without having to disassemble the disk supporting shaft from the machine, furthermore performing particularly fast and simple operations.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A cutting device particularly for food processing machines and systems for bakeries, confectioneries and the like, comprising a supporting shaft (1) and a plurality of cutting disks (2) which can operatively engage a main roller (10) for rolling a ribbon of dough, said cutting disks (2) rotating rigidly with said shaft (1) and can slide axially on it, **characterized in that** parralel to the main roller (10) means (30) being further provided for the removable retention of said cutting disks (2) in the chosen position.

2. The cutting device according to claim 1, **characterized in that** said shaft (1) has a polygonal transverse cross-section.

3. The cutting device according to the preceding claims, **characterized in that** said shaft (1) has a hexagonal transverse cross-section.

4. The cutting device according to one or more of the preceding claims, **characterized in that** it comprises a pair of levers (3) which rotatably support said shaft (1) and are supported, so as to allow oscillation, about a pivot (5) which is rigidly coupled to the frame of the machine.

5. The cutting device according to one or more of the preceding claims, **characterized in that** said main roller (10) is provided with end flanges (10a) on the outside whereof a main gear (20) is keyed which is connected to the motor of the machine, a driven gear (21) detachably engaging said main gear (20) and being keyed on said shaft (1).

6. The cutting device according to one or more of the preceding claims, **characterized in that** said shaft (1) protrudes axially with respect to said main roller (10) in order to define a region, arranged outside the main roller, for confining the cutting disks (2) of said shaft (1) that are not involved in the process.

7. The cutting device according to one or more of the preceding claims, **characterized in that** said means (30) for the removable retention of said cutting disks in the chosen position comprise a positioning roller (30) having a plurality of grooves (31) for the removable insertion of peripheral regions of said cutting disks (2).

8. The cutting device according to one or more of the preceding claims, **characterized in that** said shaft (1) is supported by arms (3) joined by a cross-member (30) which rotatably supports threaded pivots which can engage threaded holes (33) provided in a cross-member (34) of said frame of the machine.

9. The cutting device according to one or more of the preceding claims, **characterized in that** said positioning roller (30) is adapted to act as an extractor disk for the ribbon of dough being processed after cutting by means of said cutting disks (2).

## Patentansprüche

1. Schneidvorrichtung insbesondere für nahrungsmittelverarbeitende Maschinen und Systeme für Bäckereien, Konditoreien und dergleichen
- mit einer tragenden Welle (1) und
- mit einer Vielzahl von Schneidscheiben (2), die funktionsmäßig an einer Hauptwalze (10) zum Abwalzen eines Teigbandes angreifen können,
- wobei die Schneidscheiben (2) sich fest mit der Welle (1) drehen und sich auf ihr axial verschieben können,
**dadurch gekennzeichnet,**
- **dass** parallel zu der Hauptwalze (10) weiterhin Einrichtungen (30) zum lösbaren Halten der Schneidscheiben (2) in der ausgewählten Position vorgesehen sind.

2. Schneidvorrichtung nach Anspruch 1, **dadurch gekennzeichnet, dass** die Welle (1) einen polygonalen Querschnitt hat.

3. Schneidvorrichtung nach den vorhergehenden Ansprüchen, **dadurch gekennzeichnet, dass** die Welle (1) einen sechseckigen Querschnitt hat.

4. Schneidvorrichtung nach einem oder mehreren der vorhergehenden Ansprüche, **dadurch gekennzeichnet, dass** sie ein Paar von Hebeln (3) aufweist, die die Welle (1) drehbar lagern und an einem Schwenkzapfen (5), der starr mit dem Maschinenrahmen verbunden ist, so gelagert sind, dass sie um den Schwenkzapfen (5) verschwenken können.

5. Schneidvorrichtung nach einem oder mehreren der vorhergehenden Ansprüche, **dadurch gekennzeichnet, dass** die Hauptwalze (10) mit Stirnflanschen (10a) versehen ist, an deren Außenseite ein Hauptzahnrad (20) aufgekeilt ist, das mit dem Motor der Maschine verbunden ist, wobei auf die Welle (1) ein angetriebenes Zahnrad (21) aufgekeilt ist, das lösbar mit dem Hauptzahnrad (20) kämmt.

6. Schneidvorrichtung nach einem oder mehreren der vorhergehenden Ansprüche, **dadurch gekennzeichnet, dass** die Welle (1) axial bezogen auf die Hauptwalze (10) zur Bildung eines außerhalb der Hauptwalze angeordneten Bereichs zum Einschließen der Schneidscheiben (2) der Welle (1) vorsteht, die nicht an dem Prozess beteiligt sind.

7. Schneidvorrichtung nach einem oder mehreren der vorhergehenden Ansprüche, **dadurch gekennzeichnet, dass** die Einrichtungen (30) zum lösbaren Halten der Schneidscheiben in der ausgewählten Position eine Positionierwalze (30) aufweisen, die eine Vielzahl von Nuten (31) für das lösbare Einführen von Umfangsbereichen der Schneidscheiben (2) hat.

8. Schneidvorrichtung nach einem oder mehreren der vorhergehenden Ansprüche, **dadurch gekennzeichnet, dass** die Welle (1) von Armen (3) gelagert wird, die durch ein Querelement (30) verbunden sind, welches Gewindezapfen drehbar lagert, die in Gewindebohrungen (33) in einem Querelement (34) des Maschinenrahmens eingreifen können.

9. Schneidvorrichtung nach einem oder mehreren der vorhergehenden Ansprüche, **dadurch gekennzeichnet, dass** die Positionierwalze (30) so ausgelegt ist, dass sie als Abziehscheibe für das zu verarbeitende Teigband nach dem Schneiden mittels der Schneidscheiben (2) wirkt.

## Revendications

1. Dispositif de coupe, notamment pour machines et systèmes de traitement de produits alimentaires, destinés à la boulangerie, à la pâtisserie, à la confiserie et similaire, comprenant un arbre de support (1) et une pluralité de disques coupants (2) qui peuvent engager activement un rouleau principal (10) pour rouler un ruban de pâte, lesdits disques coupants (2) étant solidaires en rotation dudit arbre (1) et pouvant coulisser axialement sur celui-ci,
**caractérisé en ce que**, parallèles au rouleau principal (10), des moyens (30) sont prévus additionnellement pour maintenir de façon amovible, lesdits disques coupants (2) dans la position choisie.

2. Dispositif de coupe selon la revendication 1,
**caractérisé en ce que** ledit arbre (1) présente une section transversale polygonale.

3. Dispositif de coupe selon les revendications précédentes,
**caractérisé en ce que** ledit arbre (1) présente une section transversale hexagonale.

4. Dispositif de coupe selon une ou plusieurs des revendications précédentes,
**caractérisé en ce qu'**il comprend une paire de leviers (3) qui supportent de manière rotative ledit arbre (1) et sont supportés, de façon à permettre des oscillations, autour d'un axe ou pivot (5) solidaire du châssis ou de la structure de la machine.

5. Dispositif de coupe selon l'une ou plusieurs des revendications précédentes,
**caractérisé en ce que** ledit rouleau principal (10) est muni de flancs (10a) d'extrémité à l'extérieur duquel est calé un engrenage principal (20) qui est relié au moteur de la machine, ledit engrenage principal (20) engageant de manière amovible un engrenage entraîné (21) calé sur ledit arbre (1).

6. Dispositif de coupe selon l'une ou plusieurs des revendications précédentes,
**caractérisé en ce que** ledit arbre (1) fait saillie axialement par rapport audit rouleau principal (10) de façon à définir une région, agencée à l'extérieur du rouleau principal, pour confiner les disques coupants (2) dudit arbre (1) qui ne sont pas impliqués dans le processus.

7. Dispositif de coupe selon l'une ou plusieurs des revendications précédentes,
**caractérisé en ce que** lesdits moyens (30) pour maintenir de façon amovible lesdits disques coupants dans la position choisie comprennent un rouleau de positionnement (30) présentant une pluralité de gorges (31) pour l'insertion amovible des régions périphériques desdits disques coupants (2).

8. Dispositif de coupe selon l'une ou plusieurs des revendications précédentes,
**caractérisé en ce que** ledit arbre (1) est supporté par des bras (3) réunis par un élément de traverse (30) qui supporte de manière rotative des pivots filetés qui peuvent s'engager dans des trous filetés (33) aménagés dans un élément de traverse (34) dudit châssis de la machine.

9. Dispositif de coupe selon l'une ou plusieurs des revendications précédentes,
**caractérisé en ce que** ledit rouleau de positionnement (30) est apte à faire fonction de disque d'extraction pour le ruban de pâte en cours de traitement après la découpe au moyen desdits disques coupants (2).
